# EUROPÄISCHE PATENTSCHRIFT

(11) **EP 3 489 247 B1**
(45) Veröffentlichungstag und Bekanntmachung des Hinweises auf die Patenterteilung: **27.05.2020**
(21) Anmeldenummer: 18206633.2
(22) Anmeldetag: 16.11.2018
(51) Int. Cl.: C07F 7/18, C08K 3/36, C08K 5/548, C08L 9/06

(54) **SILANMISCHUNGEN UND VERFAHREN ZU DEREN HERSTELLUNG**
SILANE COMPOUNDS AND METHOD FOR ITS MANUFACTURE
MÉLANGES DE SILANES ET LEUR PROCÉDÉ DE FABRICATION

(30) Priorität: 28.11.2017 DE 102017221259
(43) Veröffentlichungstag der Anmeldung: 29.05.2019
(73) Patentinhaber: Evonik Operations GmbH, 45128 Essen (DE)
(72) Erfinder: Röben, Caren, 45133 Essen (DE); Moser, Ralph, Jersey City, New Jersey 07310 (US); Köpfer, Alexander, 79872 Bernau im Schwarzwald (DE); Mayer, Stefanie, 79618 Rheinfelden (DE); Hasse, Andre, 52428 Jülich (DE); Forster, Frank, 63825 Schöllkrippen (DE)
(74) Vertreter: Evonik Patent Association

(56) Entgegenhaltungen:
- J WILSON ET AL: "Substituted organopolysiloxanes and use thereof", WO2006013060 A1, 1. Januar 2006 (2006-01-01), Seiten 1-3, XP55580411, & WO 2006/013060 A1 (PHOSPHONICS LTD [GB]; WILSON JOHN ROBERT HOWE [GB] ET AL.) 9. Februar 2006 (2006-02-09)
- VLASOVA N N ET AL: "Photochemical addition of 1,2-ethanediol to alkenyltrichloro- and triorganylalkenysilanes", JOURNAL OF GENERAL CHEMISTRY U, CONSULTANTS BUREAU, NEW YORK, NY, US, Bd. 53, Nr. 2, 1. Januar 1983 (1983-01-01) , Seiten 329-333, XP009086174, ISSN: 0022-1279

## Beschreibung

Die Erfindung betrifft Silanmischungen und Verfahren zur deren Herstellung.

Aus EP 0670347 und EP 0753549 sind Kautschukmischungen, enthaltend mindestens einen Vernetzer, einen Füllstoff, gegebenenfalls weitere Kautschukhilfsmittel sowie mindestens ein Verstärkungsadditiv der Formel

R¹R²R³Si-X¹-(-Sₓ-Y-)ₘ-(-Sₓ-X²-SiR¹W²R³)ₙ

bekannt.

Aus JP2012149189 ist das Silan der Formel (R¹O)ₗR²₍₃₋ₗ₎Si-R³-(SₘR⁴)ₙ-S-R¹, mit R⁵ = -C(=O)-R⁶ R⁶ = C1-C20 bekannt.

Ferner sind aus EP 1375504 Silane der Formel

(R¹O)_{(3-P)}(R²)_{P}Si-R³-Sm-R⁴-(Sₙ-R⁴)_{q}-Sₘ-R³-Si(R²)_{P}(OR¹)_{(3-P)}

bekannt.

Aus WO 2005/059022 sind Kautschukmischungen, enthaltend ein Silan der Formel

[R²R³R⁴Si-R⁵-S-R⁶-R⁷-]R¹

bekannt.

Ferner sind Kautschukmischungen, enthaltend ein bifunktionelles Silan und ein weiteres Silan der Formel (Y)G(Z) (WO 2012/092062) und Kautschukmischungen, enthaltend Bistriethoxysilylpropylpolysulfid und Bistriethoxysilylpropylmonosulfid (EP1085045) bekannt.

Aus EP 1928949 ist eine Kautschukmischung, enthaltend die Silane (H₅C₂O)₃Si-(CH₂)₃-X-(CH₂)₆-S₂-(CH₂)₆-X-(CH₂)₃-Si(OC₂H₅)₃ und/oder (H₅C₂O)₃Si-(CH₂)₃-X-(CH₂)₁₀-S₂-(CH₂)₆-X-(CH₂)₁₀-Si(OC₂H₅)₃ und (H₅C₂O)₃Si-(CH₂)₃-Sₘ-(CH₂)₃-Si(OC₂H₅)₃ bekannt.

Aus WO 2006/013060 sind substituierte Polysiloxane bekannt. Als Edukte in einigen Beispielen werden unter anderem Mischungen aus (CH₃O)₃Si(CH₂)₂S(CH₂)_{2/3}SH und (CH₃O)₃Si(CH₂)₂S-(CH₂)_{2/3} S(CH₂)₂Si(OCH₃)₃ eingesetzt.
Ferner ist aus VLASOVA N N ET AL: "Photochemical addition of 1,2-ethanediol to alkenyltrichloro- and triorganylalkenysilanes" JOURNAL OF GENERAL CHEMISTRY U, CONSULTANTS BUREAU, NEW YORK, NY, US, Bd. 53, Nr. 2, 1. Januar 1983, Seiten 329-333, XP009086174 die Umsetzung eines Vinylsilans mit einer Dimercaptoverbindung bekannt.

Aufgabe der vorliegenden Erfindung ist es, Silanmischungen zur Verfügung zu stellen, welche gegenüber aus dem Stand der Technik bekannten Silanen zu Gummimischungen mit verbessertem Rollwiderstand führen. Ferner führen die erfindungsgemäßen Silanmischungen zu einer vorteilhaften Lösung des Zielkonflikts zwischen Rollwiderstand und Nasshaftung.

Gegenstand der Erfindung ist eine Silanmischung, enthaltend ein Silan der Formel I

(R¹)_{y}(R²)_{3-y}Si-R³-(S-R⁴)ₙ-S-R⁵ (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹ gleich oder verschieden sind und C1-C10-Alkoxygruppen, vorzugsweise Methoxy- oder Ethoxygruppen, Phenoxygruppe, C4-C10-Cycloalkoxygruppen oder Alkylpolyethergruppe -O-(R⁶-O)ᵣ-R⁷ mit R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, vorzugsweise -CH₂-CH₂-, r eine ganze Zahl von 1 bis 30, vorzugsweise 3 bis 10, und R⁷ unsubstituierte oder substituierte, verzweigte oder unverzweigte einbindige Alkyl-, Alkenyl-, Aryl- oder Aralkylgruppen, vorzugsweise C₁₃H₂₇ Alkyl-Gruppe ist,
R² gleich oder verschieden sind und C6-C20-Arylgruppen, vorzugsweise Phenyl, C1-C10-Alkylgruppen, vorzugsweise Methyl oder Ethyl, C2-C20-Alkenylgruppe, C7-C20-Aralkylgruppe oder Halogen, vorzugsweise Cl ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C7-, insbesondere bevorzugt CH₂CH₂ und CH₂CH₂CH₂, sind,
R⁴ gleich oder verschieden sind und eine verzweigte oder unverzweigte, gesättigte oder ungesättigte, aliphatische, aromatische oder gemischt aliphatische/aromatische zweibindige C1-C30-, bevorzugt C1-C20-, besonders bevorzugt C1-C10-, ganz besonders bevorzugt C2-C7-, insbesondere bevorzugt (CH₂)₆, Kohlenwasserstoffgruppe sind,
R⁵ eine -C(=O)-CH₃, -C(=O)-C₂H₅, -C(=O)-C₃H₇, -C(=O)-C₄H₉, -C(=O)-C₅H₁₁, -C(=O)-C₆H₁₃, - C(=O)-C₇H₁₅, -C(=O)-C₈H₁₇, -C(=O)-C₉H₁₉, -C(=O)-C₁₀H₂₁, -C(=O)-C₁₁H₂₃, -C(=O)-C₁₂H₂₅, -C(=O)-C₁₃H₂₇, -C(=O)-C₁₄H₂₉, -C(=O)-C₁₅H₃₁, -C(=O)-C₁₆H₃₃ oder -C(=O)-C₁₇H₃₅ ist, und n 1, 2 oder 3 ist, y gleich oder verschieden sind und 1, 2 oder 3 sind, z ist 1, 2 oder 3, und das Molverhältnis an Silan der Formel I zu Silan der Formel II 20:80 - 90:10 beträgt.

Das Molverhältnis an Silan der Formel I zu Silan der Formel II kann vorzugsweise 25:75 - 85:15, besonders bevorzugt 25:75-80:20, ganz besonders bevorzugt 30:70 - 75:25, sein.

Bevorzugt kann die Silanmischung ein Silan der Formel I

(R¹)_{y}(R²)_{3-y}Si-R³-(S-R⁴)ₙ-S-R⁵ (I),

und ein Silan der Formel II

(R¹)_{y}(R²)_{3-y}Si-R³-(S-R⁴)_{z}-S-R³-Si(R¹)_{y}(R²)_{3-y} (II),

enthalten, wobei n gleich 1 ist, z gleich 1 ist und R¹, R², R³, R⁴, R⁵ und y die gleiche Bedeutung haben wie oben beschrieben.

Die erfindungsgemäße Silanmischung kann weitere Additive enthalten oder nur aus Silanen der Formel I und Silanen der Formel II bestehen.

Die erfindungsgemäße Silanmischung kann Oligomere, die durch Hydrolyse und Kondensation der Silane der Formel I und/oder Silane der Formel II entstehen, enthalten.

Die erfindungsgemäße Silanmischung kann auf einem Träger, beispielsweise Wachs, Polymer oder Ruß, aufgebracht sein. Die erfindungsgemäße Silanmischung kann auf einer Kieselsäure aufgebracht sein, wobei die Anbindung physikalisch oder chemisch erfolgt sein kann.

R³ bzw. R⁴ können unabhängig voneinander -CH₂-, -CH₂CH₂-, -CH₂CH₂CH₂-, -CH₂CH₂CH₂CH₂-, - CH(CH₃)-, -CH₂CH(CH₃)-, -CH(CH₃)CH₂-, -C(CH₃)₂-, -CH(C₂H₅)-, -CH₂CH₂CH(CH₃)-, - CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂- , -CH₂CH₂CH₂CH₂CH₂CH₂CH₂CH₂CH₂CH₂CH₂CH₂CH₂CH₂CH₂CH₂CH₂CH₂- oder 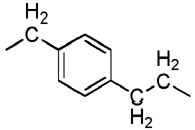 bzw. 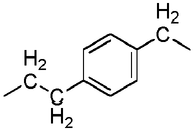 sein.

R¹ kann bevorzugt Methoxy oder Ethoxy sein.

R⁵ ist -C(=O)-CH₃, -C(=O)-C₂H₅, -C(=O)-C₃H₇, -C(=O)-C₄H₉, -C(=O)-C₅H₁₁, -C(=O)-C₆H₁₃, -C(=O)-C₇H₁₅, -C(=O)-C₈H₁₇, -C(=O)-C₉H₁₉, -C(=O)-C₁₀H₂₁, -C(=O)-C₁₁H₂₃, -C(=O)-C₁₂H₂₅, - C(=O)-C₁₃H₂₇, -C(=O)-C₁₄H₂₉, -C(=O)-C₁₅H₃₁, -C(=O)-C₁₆H₃₃ oder -C(=O)-C₁₇H₃₅.

Silane der Formel I können bevorzugt sein:
(EtO)₃Si-(CH₂)₃-S-(CH₂)-S-C(=O)-CH₃,
(EtO)₃Si-(CH₂)₃-S-(CH₂)-S-C(=O)-C₂H₅,
(EtO)₃Si-(CH₂)₃-S-(CH₂)-S-C(=O)-C₃H₇,
(EtO)₃Si-(CH₂)₃-S-(CH₂)-S-C(=O)-C₄H₉,
(EtO)₃Si-(CH₂)₃-S-(CH₂)-S-C(=O)-C₅H₁₁,
(EtO)₃Si-(CH₂)₃-S-(CH₂)-S-C(=O)-C₆H₁₃,
(EtO)₃Si-(CH₂)₃-S-(CH₂)-S-C(=O)-C₇H₁₅,
(EtO)₃Si-(CH₂)₃-S-(CH₂)-S-C(=O)-C₉H₁₉,
(EtO)₃Si-(CH₂)₃-S-(CH₂)-S-C(=O)-C₁₁H₂₃,
(EtO)₃Si-(CH₂)₃-S-(CH₂)-S-C(=O)-C₁₃H₂₇,
(EtO)₃Si-(CH₂)₃-S-(CH₂)-S-C(=O)-C₁₅H₃₁,
(EtO)₃Si-(CH₂)₃-S-(CH₂)-S-C(=O)-C₁₇H₃₅,

(EtO)₃Si-(CH₂)₃-S-(CH₂)₂-S-C(=O)-CH₃,
(EtO)₃Si-(CH₂)₃-S-(CH₂)₂-S-C(=O)-C₂H₅,
(EtO)₃Si-(CH₂)₃-S-(CH₂)₂-S-C(=O)-C₃H₇,
(EtO)₃Si-(CH₂)₃-S-(CH₂)₂-S-C(=O)-C₄H₉,
(EtO)₃Si-(CH₂)₃-S-(CH₂)₂-S-C(=O)-C₅H₁₁,
(EtO)₃Si-(CH₂)₃-S-(CH₂)₂-S-C(=O)-C₆H₁₃,
(EtO)₃Si-(CH₂)₃-S-(CH₂)₂-S-C(=O)-C₇H₁₅,
(EtO)₃Si-(CH₂)₃-S-(CH₂)₂-S-C(=O)-C₉H₁₉,
(EtO)₃Si-(CH₂)₃-S-(CH₂)₂-S-C(=O)-C₁₁H₂₃,
(EtO)₃Si-(CH₂)₃-S-(CH₂)₂-S-C(=O)-C₁₃H₂₇,
(EtO)₃Si-(CH₂)₃-S-(CH₂)₂-S-C(=O)-C₁₅H₃₁,
(EtO)₃Si-(CH₂)₃-S-(CH₂)₂-S-C(=O)-C₁₇H₃₅,

(EtO)₃Si-(CH₂)₃-S-(CH₂)₃-S-C(=O)-CH₃,
(EtO)₃Si-(CH₂)₃-S-(CH₂)₃-S-C(=O)-C₂H₅,
(EtO)₃Si-(CH₂)₃-S-(CH₂)₃-S-C(=O)-C₃H₇,
(EtO)₃Si-(CH₂)₃-S-(CH₂)₃-S-C(=O)-C₄H₉,
(EtO)₃Si-(CH₂)₃-S-(CH₂)₃-S-C(=O)-C₅H₁₁,
(EtO)₃Si-(CH₂)₃-S-(CH₂)₃-S-C(=O)-C₆H₁₃,
(EtO)₃Si-(CH₂)₃-S-(CH₂)₃-S-C(=O)-C₇H₁₅,
(EtO)₃Si-(CH₂)₃-S-(CH₂)₃-S-C(=O)-C₉H₁₉,
(EtO)₃Si-(CH₂)₃-S-(CH₂)₃-S-C(=O)-C₁₁H₂₃,
(EtO)₃Si-(CH₂)₃-S-(CH₂)₃-S-C(=O)-C₁₃H₂₇,
(EtO)₃Si-(CH₂)₃-S-(CH₂)₃-S-C(=O)-C₁₅H₃₁,
(EtO)₃Si-(CH₂)₃-S-(CH₂)₃-S-C(=O)-C₁₇H₃₅,

(EtO)₃Si-(CH₂)₃-S-(CH₂)₆-S-C(=O)-CH₃,
(EtO)₃Si-(CH₂)₃-S-(CH₂)₆-S-C(=O)-C₂H₅,
(EtO)₃Si-(CH₂)₃-S-(CH₂)₆-S-C(=O)-C₃H₇,
(EtO)₃Si-(CH₂)₃-S-(CH₂)₆-S-C(=O)-C₄H₉,
(EtO)₃Si-(CH₂)₃-S-(CH₂)₆-S-C(=O)-C₅H₁₁,
(EtO)₃Si-(CH₂)₃-S-(CH₂)₆-S-C(=O)-C₆H₁₃,
(EtO)₃Si-(CH₂)₃-S-(CH₂)₆-S-C(=O)-C₇H₁₅,
(EtO)₃Si-(CH₂)₃-S-(CH₂)₆-S-C(=O)-C₉H₁₉,
(EtO)₃Si-(CH₂)₃-S-(CH₂)₆-S-C(=O)-C₁₁H₂₃,
(EtO)₃Si-(CH₂)₃-S-(CH₂)₆-S-C(=O)-C₁₃H₂₇,
(EtO)₃Si-(CH₂)₃-S-(CH₂)₆-S-C(=O)-C₁₅H₃₁,
(EtO)₃Si-(CH₂)₃-S-(CH₂)₆-S-C(=O)-C₁₇H₃₅,

Insbesondere bevorzugt sind die Silane der Formel I (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ und (EtO)₃Si-(CH₂)₃-S-(CH₂)₆-S-C(=O)-C₁₇H₃₅.

Silane der Formel II können bevorzugt sein:
(EtO)₃Si-CH₂-S-CH₂-S-CH₂-Si(OEt)₃,
(EtO)₃Si-(CH₂)₂-S-CH₂-S-(CH₂)₂-Si(OEt)₃,
(EtO)₃Si-(CH₂)₃-S-CH₂-S-(CH₂)₃-Si(OEt)₃,

(EtO)₃Si-CH₂-S-(CH₂)₂-S-CH₂-Si(OEt)₃,
(EtO)₃Si-(CH₂)₂-S-(CH₂)₂-S-(CH₂)₂-Si(OEt)₃,
(EtO)₃Si-(CH₂)₃-S-(CH₂)₂-S-(CH₂)₃-Si(OEt)₃,

(EtO)₃Si-CH₂-S-(CH₂)₃-S-CH₂-Si(OEt)₃,
(EtO)₃Si-(CH₂)₂-S-(CH₂)₃-S-(CH₂)₂-Si(OEt)₃,
(EtO)₃Si-(CH₂)₃-S-(CH₂)₃-S-(CH₂)₃-Si(OEt)₃,

(EtO)₃Si-CH₂-S-(CH₂)₄-S-CH₂-Si(OEt)₃,
(EtO)₃Si-(CH₂)₂-S-(CH₂)₄-S-(CH₂)₂-Si(OEt)₃,
(EtO)₃Si-(CH₂)₃-S-(CH₂)₄-S-(CH₂)₃-Si(OEt)₃,

(EtO)₃Si-CH₂-S-(CH₂)₅-S-CH₂-Si(OEt)₃,
(EtO)₃Si-(CH₂)₂-S-(CH₂)₅-S-(CH₂)₂-Si(OEt)₃,
(EtO)₃Si-(CH₂)₃-S-(CH₂)₅-S-(CH₂)₃-Si(OEt)₃,

(EtO)₃Si-CH₂-S-(CH₂)₆-S-CH₂-Si(OEt)₃,
(EtO)₃Si-(CH₂)₂-S-(CH₂)₆-S-(CH₂)₂-Si(OEt)₃,
(EtO)₃Si-(CH₂)₃-S-(CH₂)₆-S-(CH₂)₃-Si(OEt)₃,

Insbesondere bevorzugt ist das Silan der Formel II

(EtO)₃Si-(CH₂)₃-S-(CH₂)₆-S-(CH₂)₃-Si(OEt)₃.

Ganz besonders bevorzugt ist eine Silanmischung aus (EtO)₃Si-(CH₂)₃-(S-(CH₂)₆)ₙ-S-C(=O)-R⁵ und (EtO)₃Si-(CH₂)₃-S-(CH₂)₆-S-(CH₂)₃-Si(OEt)₃, wobei n gleich 1 ist.

Außerordentlich bevorzugt ist eine Silanmischung aus (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ oder (EtO)₃Si-(CH₂)₃-S-(CH₂)₆-S-C(=O)-C₁₇H₃₅ und (EtO)₃Si-(CH₂)₃-S-(CH₂)₆-S-(CH₂)₃-Si(OEt)₃.

Ein weiterer Gegenstand der Erfindung ist ein erstes Verfahren zur Herstellung der erfindungsgemäßen Silanmischung, welches dadurch gekennzeichnet ist, dass man das Silan der Formel I

(R¹)_{y}(R²)_{3-y}Si-R³-(S-R⁴)ₙ-S-R⁵ (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹, R², R³, R⁴, R⁵, n, y und z die oben genannte Bedeutung haben,
in einem Molverhältnis von 20:80 - 90:10, vorzugsweise 25:75 - 85:15, besonders bevorzugt 25:75-80:20, ganz besonders bevorzugt 30:70 - 75:25, mischt.

Vorzugsweise kann man ein Silan der Formel I

(R¹)_{y}(R²)_{3-y}Si-R³-(S-R⁴)ₙ-S-R⁵ (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹, R², R³, R⁴, R⁵ und y die oben genannte Bedeutung haben und n gleich 1 ist und z = 1 ist, mischen.

Das erfindungsgemäße Verfahren kann unter Luftausschluss durchgeführt werden. Das erfindungsgemäße Verfahren kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.
Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Das erfindungsgemäße Verfahren kann zwischen 20 °C und 100 °C, bevorzugt zwischen 20 °C und 50 °C, besonders bevorzugt zwischen 20 °C und 30 °C, durchgeführt werden.

Das erfindungsgemäße Verfahren kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Essigsäuremethylester oder einer Mischung der zuvor genannten Lösungsmittel durchgeführt werden. Das erfindungsgemäße Verfahren kann bevorzugt ohne Lösungsmittel durchgeführt werden.

Ein weiterer Gegenstand der Erfindung ist ein Verfahren zur Herstellung der erfindungsgemäßen Silanmischung mit n = 1 und z = 1, welches dadurch gekennzeichnet ist, dass man
in einem ersten Schritt ein Mercaptosilan der Formel III

(R¹)_{y}(R²)_{3-y}Si-R³-SH (III)

mit einer Halogenverbindung der Formel IV

Hal-R⁴-Hal (IV),

wobei R¹, R², R³ und R⁴ die oben genannte Bedeutungen haben und Hal gleich F, Cl, Br oder I , vorzugsweise Cl, ist,
in einem Molverhältnis der Formel (III) zur Formel (IV) von 34:66 - 76:24 umsetzt und in einem zweiten Schritt das Produkt aus dem ersten Verfahrensschritt mit einem Salz einer Thiocarbonsäure der Formel (V)

NaS-C(=O)-R⁵ (V)

wobei R⁵ die oben genannte Bedeutung hat, umsetzt,
oder in dem zweiten Schritt das Produkt aus dem ersten Verfahrensschritt mit NaSH und anschließend einem Säurechlorid der Formel (VI)

Cl-C(=O)-R⁵ (VI)

wobei R⁵ die oben genannte Bedeutung hat, umsetzt.

Mercaptosilane der Formel III können bevorzugt sein:
(C₂H₅O)₃Si-CH₂-SH,
(C₂H₅O)₃Si-CH₂CH₂-SH,
(C₂H₅O)₃Si-CH₂CH₂CH₂-SH.

Halogenverbindungen der Formel IV können bevorzugt sein:
Cl-CH₂-Cl,
Cl-CH₂CH₂-Cl,
Cl-CH₂CH₂CH₂-Cl,
Cl-CH₂CH₂CH₂CH₂-Cl,
Cl-CH₂CH₂CH₂CH₂CH₂-Cl,
Cl-CH₂CH₂CH₂CH₂CH₂CH₂-Cl,
Cl-CH₂CH₂CH₂CH₂CH₂CH₂CH₂-Cl oder,
Cl-CH₂CH₂CH₂CH₂CH₂CH₂CH₂CH₂-Cl.

Salze einer Thiocarbonsäure der Formel (V) können bevorzugt sein: NaS-C(=O)-CH₃, NaS-C(=O)-C₇H₁₅ oder NaS-C(=O)-C₁₇H₃₅.

Säurechloride der Formel (VI) können bevorzugt sein: Cl-C(=O)-CH₃, Cl-C(=O)-C₇H₁₅ oder Cl-C(=O)-C₁₇H_{35.}

Insbesondere bevorzugt kann das Mercaptosilan der Formel III
(EtO)₃Si-(CH₂)₃-SH,
die Halogenverbindung der Formel IV
Cl-(CH₂)₆-Cl,
und die Thiocarbonsäure der Formel V NaS-C(=O)-CH₃, NaS-C(=O)-C₇H₁₅ oder NaS-C(=O)-C₁₇H₃₅ sein, oder das Mercaptosilan der Formel III kann
(EtO)₃Si-(CH₂)₃-SH,
die Halogenverbindung der Formel IV
Cl-(CH₂)₆-Cl,
und das Säurechlorid der Formel VI Cl-C(=O)-CH₃, Cl-C(=O)-C₇H₁₅ oder Cl-C(=O)-C₁₇H₃₅ sein.

Bei dem Verfahren zur Herstellung der erfindungsgemäßen Silanmischung mit n = 1 und z = 1 kann der erste und zweite Verfahrensschritt in einem Reaktionsbehälter durch Zugabe aller Edukte erfolgen.

Bei dem ersten Schritt des Verfahrens zur Herstellung der erfindungsgemäßen Silanmischung mit n = 1 und z = 1 kann die Halogenverbindung der Formel IV zu dem Mercaptosilan der Formel III dosiert werden.
Bei dem ersten Schritt des Verfahrens zur Herstellung der erfindungsgemäßen Silanmischung mit n = 1 und z = 1 kann bevorzugt das Mercaptosilan der Formel III zu der Halogenverbindung der Formel IV dosiert werden.

Die Reaktion im ersten Schritt des Verfahrens zur Herstellung der erfindungsgemäßen Silanmischung mit n = 1 und z = 1 kann unter Luftausschluss durchgeführt werden.
Die Reaktion im ersten Schritt des Verfahrens zur Herstellung der erfindungsgemäßen Silanmischung mit n = 1 und z = 1 kann unter Schutzgasatmosphäre durchgeführt werden, zum Beispiel unter Argon oder Stickstoff, bevorzugt unter Stickstoff.

Der erste Schritt des Verfahrens zur Herstellung der erfindungsgemäßen Silanmischung mit n = 1 und z = 1 kann bei Normaldruck, erhöhtem Druck oder reduziertem Druck durchgeführt werden. Bevorzugt kann das erfindungsgemäße Verfahren bei Normaldruck durchgeführt werden. Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Der erste Schritt des Verfahrens zur Herstellung der erfindungsgemäßen Silanmischung mit n = 1 und z = 1 kann zwischen 0 °C und 150 °C, bevorzugt zwischen 30 °C und 100 °C, besonders bevorzugt zwischen 60 °C und 80 °C durchgeführt werden.

Die Umsetzung im ersten Schritt des Verfahrens zur Herstellung der erfindungsgemäßen Silanmischung mit n = 1 und z = 1 kann ohne Lösungsmittel oder in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin, Ethylacetat oder eine Mischung der zuvor genannten Lösungsmittel durchgeführt werden. Das Lösungsmittel kann bevorzugt Dichlormethan, Ethanol, Methyltertbutylether, Toluol, Ethylacetat, Pentan, Hexan oder eine Mischung der zuvor genannten Lösungsmittel sein.

Die Umsetzung im ersten Schritt des Verfahrens zur Herstellung der erfindungsgemäßen Silanmischung mit n = 1 und z = 1 kann ohne organisches Lösungsmitteln durchgeführt werden. Das Lösungsmittel kann Wasser sein.

Das Reaktionsprodukt aus dem ersten Schritt des Verfahrens zur Herstellung der erfindungsgemäßen Silanmischung mit n = 1 und z = 1 kann anschließend durch Filtration von festen Nebenprodukten befreit werden.

Das Lösungsmittel im ersten Schritt des Verfahrens zur Herstellung der erfindungsgemäßen Silanmischung mit n = 1 und z = 1 kann anschließend entfernt, vorzugsweise abdestilliert, werden.

Die Reaktion im zweiten Schritt des Verfahrens zur Herstellung der erfindungsgemäßen Silanmischung mit n = 1 und z = 1 kann unter Luftausschluss durchgeführt werden.

Die Reaktion im zweiten Schritt des Verfahrens zur Herstellung der erfindungsgemäßen Silanmischung mit n = 1 und z = 1 kann unter Schutzgasatmosphäre durchgeführt werden, zum Beispiel unter Argon oder Stickstoff, bevorzugt unter Stickstoff.

Der zweite Schritt des Verfahrens zur Herstellung der erfindungsgemäßen Silanmischung mit n = 1 und z = 1 kann bei Normaldruck, erhöhtem Druck oder reduziertem Druck durchgeführt werden. Bevorzugt kann das erfindungsgemäße Verfahren bei Normaldruck durchgeführt werden. Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Der zweite Schritt des Verfahrens zur Herstellung der erfindungsgemäßen Silanmischung mit n = 1 und z = 1 kann zwischen 20 °C und 150 °C, bevorzugt zwischen 40 °C und 100 °C, besonders bevorzugt zwischen 60 °C und 90 °C, durchgeführt werden.

Die Umsetzung im zweiten Schritt des Verfahrens zur Herstellung der erfindungsgemäßen Silanmischung mit n = 1 und z = 1 kann ohne Lösungsmittel oder in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Ethylacetat, durchgeführt werden. Das Lösungsmittel kann bevorzugt Ethanol sein.

Die Umsetzung im zweiten Schritt des Verfahrens zur Herstellung der erfindungsgemäßen Silanmischung mit n = 1 und z = 1 kann ohne organisches Lösungsmitteln durchgeführt werden. Das Lösungsmittel kann Wasser sein.
Die Umsetzung im zweiten Schritt des Verfahrens zur Herstellung der erfindungsgemäßen Silanmischung mit n = 1 und z = 1 kann in Wasser in Gegenwart von Phasentransferkatalysatoren und gegebenenfalls unter Zugabe von Salzen und/oder Puffern durchgeführt werden.

Das Lösungsmittel im zweiten Schritt des Verfahrens zur Herstellung der erfindungsgemäßen Silanmischung mit n = 1 und z = 1 kann anschließend entfernt, vorzugsweise abdestilliert, werden. Das Reaktionsprodukt im zweiten Schritt des Verfahrens zur Herstellung der erfindungsgemäßen Silanmischung mit n = 1 und z = 1 kann nach der Filtration und Lösungsmittelentfernung getrocknet werden. Die Trocknung kann bei Temperaturen von 20 °C - 100 °C, vorzugsweise von 25 °C - 50 °C, erfolgen. Die Trocknung kann bei Unterdruck von 1 - 500 mbar erfolgen.

Die erfindungsgemäße Silanmischung kann als Haftvermittler zwischen anorganischen Materialien, zum Beispiel Glaskugeln, Glassplittern, Glasoberflächen, Glasfasern, oder oxidischen Füllstoffen, bevorzugt Kieselsäuren wie gefällten Kieselsäuren und pyrogenen Kieselsäuren,
und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die erfindungsgemäße Silanmischung kann als Kopplungsreagenzien in gefüllten Kautschukmischungen, beispielsweise Reifenlaufflächen, technischen Gummiartikeln oder Schuhsolen, verwendet werden.

Vorteile der erfindungsgemäßen Silanmischungen sind ein reduzierter Rollwiderstand und eine verbesserte Lösung des Zielkonflikts zwischen Rollwiderstand und Nasshaftung in Kautschukmischungen.

### Beispiele

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wurde eine definierte Menge Dimethylsulfon als interner Standard zugegeben und aus den Molverhältnissen der Produkte dazu der Massenanteil berechnet.

Vergleichsbeispiel 1: 3-Octanoylthio-1-propyltriethoxysilane NXT Silan der Firma Momentive Performance Materials.

Vergleichsbeispiel 2: Bistriethoxysilyloctan der Firma ABCR GmbH.

Vergleichsbeispiel 3: In einen PE-Flachbeutel wurden 6,84 Gewichtsteile Vergleichsbeispiel 1 mit 1,65 Gewichtsteilen Vergleichsbeispiel 2 eingewogen und vermischt. Diese Mischung entspricht einem Molverhältnis: 83 % (EtO)₃Si(CH₂)₃SCO(CH₂)₆CH₃ und 17 % (EtO)₃Si(CH₂)₈Si(OEt)₃.

Vergleichsbeispiel 4: In einen PE-Flachbeutel wurden 6,84 Gewichtsteile Vergleichsbeispiel 1 mit 2,47 Gewichtsteilen Vergleichsbeispiel 2 eingewogen und vermischt. Diese Mischung entspricht einem Molverhältnis: 77 % (EtO)₃Si(CH₂)₃SCO(CH₂)₆CH₃ und 23 % (EtO)₃Si(CH₂)₈Si(OEt)₃.

Vergleichsbeispiel 5: In einen PE-Flachbeutel wurden 6,84 Gewichtsteile Vergleichsbeispiel 1 mit 3,29 Gewichtsteilen Vergleichsbeispiel 2 eingewogen und vermischt. Diese Mischung entspricht einem Molverhältnis: 71 % (EtO)₃Si(CH₂)₃SCO(CH₂)₆CH₃ und 29 % (EtO)₃Si(CH₂)₈Si(OEt)₃.

Vergleichsbeispiel 6: In einen PE-Flachbeutel wurden 6,30 Gewichtsteile Vergleichsbeispiel 1 mit 2,53 Gewichtsteilen Vergleichsbeispiel 2 eingewogen und vermischt. Diese Mischung entspricht einem Molverhältnis: 75 % (EtO)₃Si(CH₂)₃SCO(CH₂)₆CH₃ und 25 % (EtO)₃Si(CH₂)₈Si(OEt)₃.

Vergleichsbeispiel 7: In einen PE-Flachbeutel wurden 4,20 Gewichtsteile Vergleichsbeispiel 1 mit 3,79 Gewichtsteilen Vergleichsbeispiel 2 eingewogen und vermischt. Diese Mischung entspricht einem Molverhältnis: 57 % (EtO)₃Si(CH₂)₃SCO(CH₂)₆CH₃ und 43 % (EtO)₃Si(CH₂)₈Si(OEt)₃.

Vergleichsbeispiel 8: In einen PE-Flachbeutel wurden 2,10 Gewichtsteile Vergleichsbeispiel 1 mit 5,06 Gewichtsteilen Vergleichsbeispiel 2 eingewogen und vermischt. Diese Mischung entspricht einem Molverhältnis: 33 % (EtO)₃Si(CH₂)₃SCO(CH₂)₆CH₃ und 67 % (EtO)₃Si(CH₂)₈Si(OEt)₃.

Vergleichsbeispiel 9: 1-Chlor-6-thiopropyltriethoxysilylhexan NaOEt (21% in EtOH; 1562 g; 4,820 mol) wurde über 1 h zu Mercaptopropyltriethoxysilan (1233 g; 5,170 mol) dosiert während bei Raumtemperatur gerührt wurde. Nach vollständiger Zugabe wurde die Reaktionsmischung 2 h am Rückfluss erhitzt und anschließend auf Raumtemperatur erkalten gelassen. Das entstandene Intermediat wurde über 30 min zu auf 80 °C erwärmtem 1,6-Dichlorhexan (4828 g; 31,14 mol) dosiert. Nach vollständiger Zugabe wurde das Reaktionsgemisch 3 h am Rückfluss erhitzt bevor es auf Raumtemperatur erkalten gelassen wurde. Die Reaktionsmischung wurde filtriert und der Filterkuchen mit EtOH gespült. Die flüchtigen Bestandteile wurden unter vermindertem Druck entfernt und das Zwischenprodukt 1-Chlor-6-thiopropyltriethoxysilylhexan (Ausbeute: 89%, Molverhältnis: 97% 1-Chlor-6-thiopropyltriethoxysilylhexan, 3% Bis(thiopropyltriethoxysilyl)hexan; Gew.-%: 95 Gew.-% 1-Chlor-6-thiopropyltriethoxysilylhexan, 5 Gew.-% 1,6-Bis(thiopropyltriethoxysilyl)hexan) als farblose bis braune Flüssigkeit erhalten.

Vergleichsbeispiel 10: S-(6-((3-(Triethoxysilyl)propyl)thio)hexyl)thioacetat Na₂CO₃ (59,78 g; 0,564 mol) und eine wässrige Lösung von NaSH (40% in Wasser; 79,04 g; 0,564 mol) wurden mit Wasser (97,52 g) vorgelegt. Dann wurde Tetrabutylphosphoniumbromid (TBPB) (50% in Wasser; 3,190 g; 0,005 mol) zugegeben und Acetylchlorid (40,58 g; 0,517 mol) über 1 h zugetropft wobei die Reaktionstemperatur bei 25-32 °C gehalten wurde. Nach vollständiger Zugabe des Acetylchlorids wurde 1 h bei Raumtemperatur gerührt. Dann wurde TBPB (50% in Wasser; 3,190 g; 0,005 mol) und 1-Chlor-6-thiopropyltriethoxysilylhexan (aus Vergleichsbeispiel 9; 167,8 g; 0,470 mol) zugegeben und 3-5 h am Rückfluss erhitzt. Der Reaktionsfortschritt wurde mittels Gaschromatographie verfolgt. Als das 1-Chlor-6-thiopropyltriethoxysilylhexan zu >96% abreagiert war wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thioacetat (Ausbeute: 90%, Molverhältnis: 97% S-(6-((3-(Triethoxysilyl)propyl)thio)hexyl)thioacetat, 3% Bis(thiopropyltriethoxysilyl)hexan; Gew.-%: 96 Gew.-% S-(6-((3-(Triethoxysilyl)propyl)thio)hexyl)thioacetat, 4 Gew.-% 1,6-Bis(thiopropyltriethoxysilyl)hexan) als gelbe bis braune Flüssigkeit erhalten.

Vergleichsbeispiel 11: S-(6-((3-(Triethoxysilyl)propyl)thio)hexyl)thiooctanoat Na₂CO₃ (220,2 g; 2,077 mol) und eine wässrige Lösung von NaSH (40% in Wasser; 291,2 g, 2,077 mol) wurden mit Wasser (339,2 g) vorgelegt. Dann wurde Tetrabutylammoniumbromid (TBAB) (50% in Wasser; 10,96 g; 0,017 mol) zugegeben und Octanoylchlorid (307,2 g; 1,889 mol) über 2,5 h zugetropft wobei die Reaktionstemperatur bei 24-28 °C gehalten wurde. Nach vollständiger Zugabe des Octanoylchlorids wurde 1 h bei Raumtemperatur gerührt. Dann wurde TBAB (50% in Wasser; 32,88 g; 0,051 mol) und 1-Chlor-6-thiopropyltriethoxysilylhexan (aus Vergleichsbeispiel 9; 606,9 g; 1,700 mol) zugegeben und 10 h am Rückfluss erhitzt. Dann wurde Wasser zugegeben bis sich alle Salze gelöst hatten und die Phasen wurden separiert. Die flüchtigen Bestandteile der organischen Phase wurden unter vermindertem Druck entfernt und S-(6-((3-(Triethoxysilyl)propyl)thio)hexyl)thiooctanoat (Ausbeute: 95%, Molverhältnis: 97% S-(6-((3-(Triethoxysilyl)propyl)thio)hexyl)thiooctanoat, 3% Bis(thiopropyltriethoxysilyl)hexan; Gew.-%: 96 Gew.-% S-(6-((3-(Triethoxysilyl)propyl)thio)hexyl)thiooctanoat, 4 Gew.-% 1,6-Bis(thiopropyltriethoxysilyl)hexan) als gelbe bis braune Flüssigkeit erhalten.

Vergleichsbeispiel 12: S-(6-((3-(Triethoxysilyl)propyl)thio)hexyl)thiooctadecanoat S-(6-((3-(Triethoxysilyl)propyl)thio)hexyl)thiooctadecanoat wurde aus 1-Chlor-6-thiopropyltriethoxysilylhexan (aus Vergleichsbeispiel 9) entsprechend des Synthesebeispiels 1 und 3 in JP2012149189 hergestellt. S-(6-((3-(Triethoxysilyl)propyl)thio)hexyl)thiooctadecanoat (Ausbeute: 89%, Molverhältnis: 97% S-(6-((3-(Triethoxysilyl)propyl)thio)hexyl)thiooctadecanoat, 3% Bis(thiopropyltriethoxysilyl)hexan; Gew.-%: 97 Gew.-% S-(6-((3-(Triethoxysilyl)propyl)thio)hexyl)thiooctadecanoat, 3 Gew.-% 1,6-Bis(thiopropyltriethoxysilyl)hexan) wurde als gelbe bis braune Flüssigkeit erhalten.

Vergleichsbeispiel 13: 1,6-Bis(thiopropyltriethoxysilyl)hexan
Zu Mercaptopropyltriethoxysilan (62,0 g; 0,260 mol; 2,10 eq) wurde Natriumethanolat (21% in EtOH; 82,3 g; 0,254 mol; 2,05 eq) so zu dosiert, dass die Reaktionstemperatur nicht 35 °C überstieg. Nach vollständiger Zugabe wurde 2 h am Rückfluss erhitzt. Dann wurde das Reaktionsgemisch zu 1,6-Dichlorhexan (19,2 g; 0,124 mol; 1,00 eq) über 1,5 h bei 80 °C zugegeben. Nach vollständiger Zugabe wurde 3 h am Rückfluss erhitzt und anschließend auf Raumtemperatur erkalten gelassen. Ausgefallene Salze wurden abfiltriert und das Produkt unter vermindertem Druck vom Lösungsmittel befreit. Das Produkt (Ausbeute: 88%, Reinheit: >99% im ¹³C-NMR) wurde als klare Flüssigkeit erhalten.

Beispiel 1: In einen PE-Flachbeutel wurden 6,84 Gewichtsteile Vergleichsbeispiel 11 mit 1,59 Gewichtsteilen Vergleichsbeispiel 13 eingewogen und vermischt. Diese Mischung entspricht einem Molverhältnis: Silan der Formel I: 80 % (EtO)₃Si(CH₂)₃S(CH₂)₆SCO(CH₂)₆CH₃ und Silan der Formel II: 20 % (EtO)₃Si(CH₂)₃S(CH₂)₆S(CH₂)₃Si(OEt)₃.

Beispiel 2: In einen PE-Flachbeutel wurden 6,84 Gewichtsteile Vergleichsbeispiel 11 mit 2,39 Gewichtsteilen Vergleichsbeispiel 13 eingewogen und vermischt. Diese Mischung entspricht einem Molverhältnis: Silan der Formel I: 74 % (EtO)₃Si(CH₂)₃S(CH₂)₆SCO(CH₂)₆CH₃ und Silan der Formel II: 26 % (EtO)₃Si(CH₂)₃S(CH₂)₆S(CH₂)₃Si(OEt)₃.

Beispiel 3: In einen PE-Flachbeutel wurden 6,84 Gewichtsteile Vergleichsbeispiel 11 mit 3,18 Gewichtsteilen Vergleichsbeispiel 13 eingewogen und vermischt. Diese Mischung entspricht einem Molverhältnis: Silan der Formel I: 69 % (EtO)₃Si(CH₂)₃S(CH₂)₆SCO(CH₂)₆CH₃ und Silan der Formel II: 31 % (EtO)₃Si(CH₂)₃S(CH₂)₆S(CH₂)₃Si(OEt)₃.

Beispiel 4: In einen PE-Flachbeutel wurden 8,31 Gewichtsteile Vergleichsbeispiel 11 mit 3,22 Gewichtsteilen Vergleichsbeispiel 13 eingewogen und vermischt. Diese Mischung entspricht einem Molverhältnis: Silan der Formel I: 72 % (EtO)₃Si(CH₂)₃S(CH₂)₆SCO(CH₂)₆CH₃ und Silan der Formel II: 28 % (EtO)₃Si(CH₂)₃S(CH₂)₆S(CH₂)₃Si(OEt)₃.

Beispiel 5: In einen PE-Flachbeutel wurden 5,54 Gewichtsteile Vergleichsbeispiel 11 mit 4,83 Gewichtsteilen Vergleichsbeispiel 13 eingewogen und vermischt. Diese Mischung entspricht einem Molverhältnis: Silan der Formel I: 55 % (EtO)₃Si(CH₂)₃S(CH₂)₆SCO(CH₂)₆CH₃ und Silan der Formel II: 45 % (EtO)₃Si(CH₂)₃S(CH₂)₆S(CH₂)₃Si(OEt)₃.

Beispiel 6: In einen PE-Flachbeutel wurden 2,77 Gewichtsteile Vergleichsbeispiel 11 mit 6,44 Gewichtsteilen Vergleichsbeispiel 13 eingewogen und vermischt. Diese Mischung entspricht einem Molverhältnis: Silan der Formel I: 32 % (EtO)₃Si(CH₂)₃S(CH₂)₆SCO(CH₂)₆CH₃ und Silan der Formel II: 68 % (EtO)₃Si(CH₂)₃S(CH₂)₆S(CH₂)₃Si(OEt)₃.

Beispiel 7: In einen PE-Flachbeutel wurden 6,86 Gewichtsteile Vergleichsbeispiel 10 mit 3,22 Gewichtsteilen Vergleichsbeispiel 13 eingewogen und vermischt. Diese Mischung entspricht einem Molverhältnis: Silan der Formel I: 73 % (EtO)₃Si(CH₂)₃S(CH₂)₆SCOCH₃ und Silan der Formel II: 27 % (EtO)₃Si(CH₂)₃S(CH₂)₆S(CH₂)₃Si(OEt)₃.

Beispiel 8: In einen PE-Flachbeutel wurden 4,57 Gewichtsteile Vergleichsbeispiel 10 mit 4,83 Gewichtsteilen Vergleichsbeispiel 13 eingewogen und vermischt. Diese Mischung entspricht einem Molverhältnis: Silan der Formel I: 55 % (EtO)₃Si(CH₂)₃S(CH₂)₆SCOCH₃ und Silan der Formel II: 45 % (EtO)₃Si(CH₂)₃S(CH₂)₆S(CH₂)₃Si(OEt)₃.

Beispiel 9: In einen PE-Flachbeutel wurden 2,29 Gewichtsteile Vergleichsbeispiel 10 mit 6,44 Gewichtsteilen Vergleichsbeispiel 13 eingewogen und vermischt. Diese Mischung entspricht einem Molverhältnis: Silan der Formel I: 32 % (EtO)₃Si(CH₂)₃S(CH₂)₆SCOCH₃ und Silan der Formel II: 68 % (EtO)₃Si(CH₂)₃S(CH₂)₆S(CH₂)₃Si(OEt)₃.

Beispiel 10: In einen PE-Flachbeutel wurden 9,14 Gewichtsteile Vergleichsbeispiel 10 mit 1,61 Gewichtsteilen Vergleichsbeispiel 13 eingewogen und vermischt. Diese Mischung entspricht einem Molverhältnis: Silan der Formel I: 86 % (EtO)₃Si(CH₂)₃S(CH₂)₆SCOCH₃ und Silan der Formel II: 14 % (EtO)₃Si(CH₂)₃S(CH₂)₆S(CH₂)₃Si(OEt)₃.

Beispiel 11: In einen PE-Flachbeutel wurden 11,08 Gewichtsteile Vergleichsbeispiel 10 mit 1,61 Gewichtsteilen Vergleichsbeispiel 13 eingewogen und vermischt. Diese Mischung entspricht einem Molverhältnis: Silan der Formel I: 89 % (EtO)₃Si(CH₂)₃S(CH₂)₆SCO(CH₂)₆CH₃ und Silan der Formel II: 11 % (EtO)₃Si(CH₂)₃S(CH₂)₆S(CH₂)₃Si(OEt)₃.

Beispiel 12: In einen PE-Flachbeutel wurden 14,32 Gewichtsteile Vergleichsbeispiel 10 mit 1,61 Gewichtsteilen Vergleichsbeispiel 13 eingewogen und vermischt. Diese Mischung entspricht einem Molverhältnis: Silan der Formel I: 89% (EtO)₃Si(CH₂)₃S(CH₂)₆SCO(CH₂)₁₆CH₃ und Silan der Formel II: 11% (EtO)₃Si(CH₂)₃S(CH₂)₆S(CH₂)₃Si(OEt)₃.

Beispiel 13: 1-Chlor-6-thiopropyltriethoxysilylhexan und 1,6-Bis(thiopropyltriethoxysilyl)hexan NaOEt (21% in EtOH; 1562 g; 4,820 mol) wurde über 1 h zu Mercaptopropyltriethoxysilan (1233 g; 5,170 mol) dosiert während bei Raumtemperatur gerührt wurde. Nach vollständiger Zugabe wurde die Reaktionsmischung 2 h am Rückfluss erhitzt und anschließend auf Raumtemperatur erkalten gelassen. Das entstandene Intermediat wurde über 30 min zu auf 80 °C erwärmtem 1,6-Dichlorhexan (801,7 g; 5,170 mol) dosiert. Nach vollständiger Zugabe wurde das Reaktionsgemisch 3 h am Rückfluss erhitzt bevor es auf Raumtemperatur erkalten gelassen wurde. Die Reaktionsmischung wurde filtriert und der Filterkuchen mit EtOH gespült. Die flüchtigen Bestandteile wurden unter vermindertem Druck entfernt und das Zwischenprodukt 1-Chlor-6-thiopropyltriethoxysilylhexan (Ausbeute: 88%, Molverhältnis: 66% 1-Chlor-6-thiopropyltriethoxysilylhexan, 34% Bis(thiopropyltriethoxysilyl)hexan; Gew.-%: 56 Gew.-% 1-Chlor-6-thiopropyltriethoxysilylhexan, 44 Gew.-% 1,6-Bis(thiopropyltriethoxysilyl)hexan) erhalten.

Beispiel 14: S-(6-((3-(Triethoxysilyl)propyl)thio)hexyl)thioacetat und 1,6-Bis(thiopropyltriethoxysilyl)hexan
Die Synthese wurde wie in Vergleichsbeispiel 2 durchgeführt. Allerdings wurde statt des 1-Chlor-6-thiopropyltriethoxysilylhexans aus Vergleichsbeispiel 9 die äquimolare Menge des Materials aus Beispiel 13 verwendet. S-(6-((3-(Triethoxysilyl)propyl)thio)hexyl)thioacetat (Ausbeute: 98%, Molverhältnis: 69% S-(6-((3-(Triethoxysilyl)propyl)thio)hexyl)thioacetat, 31% Bis(thiopropyltriethoxysilyl)hexan; Gew.-%: 61 Gew.-% S-(6-((3-(Triethoxysilyl)propyl)thio)hexyl)thioacetat, 39 Gew.-% 1,6-Bis(thiopropyltriethoxysilyl)hexan) wurde als gelbe bis braune Flüssigkeit erhalten.

Beispiel 15: S-(6-((3-(Triethoxysilyl)propyl)thio)hexyl)thiooctanoat und 1,6-Bis(thiopropyltriethoxysilyl)hexan
Die Synthese wurde wie in Vergleichsbeispiel 3 durchgeführt. Allerdings wurde statt des 1-Chlor-6-thiopropyltriethoxysilylhexans aus Vergleichsbeispiel 9 die äquimolare Menge des Materials aus Beispiel 13 verwendet. S-(6-((3-(Triethoxysilyl)propyl)thio)hexyl)thiooctanoat (Ausbeute: 99%, Molverhältnis: 68% S-(6-((3-(Triethoxysilyl)propyl)thio)hexyl)thiooctanoat, 32% Bis(thiopropyltriethoxysilyl)hexan; Gew.-%: 65 Gew.-% S-(6-((3-(Triethoxysilyl)propyl)thio)hexyl)thiooctanoat, 35 Gew.-% 1,6-Bis(thiopropyltriethoxysilyl)hexan) wurde als gelbe bis braune Flüssigkeit erhalten.

Beispiel 16: S-(6-((3-(Triethoxysilyl)propyl)thio)hexyl)thiooctadecanoat und 1,6-Bis(thiopropyltriethoxysilyl)hexan
Die Synthese wurde wie in Vergleichsbeispiel 4 durchgeführt. Allerdings wurde statt des 1-Chlor-6-thiopropyltriethoxysilylhexans aus Vergleichsbeispiel 9 die äquimolare Menge des Materials aus Beispiel 13 verwendet. S-(6-((3-(Triethoxysilyl)propyl)thio)hexyl)thiooctadecanoat (Ausbeute: 87%, Molverhältnis: 67% S-(6-((3-(Triethoxysilyl)propyl)thio)hexyl)thiooctadecanoat, 33% Bis(thiopropyltriethoxysilyl)hexan; Gew.-%: 69 Gew.-% S-(6-((3-(Triethoxysilyl)propyl)thio)hexyl)thiooctadecanoat, 31 Gew.-% 1,6-Bis(thiopropyltriethoxysilyl)hexan) wurde als gelbe bis braune Flüssigkeit erhalten

Beispiel 17: Gummitechnische Untersuchungen
Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks.

**Tabelle 1:**

| | Mischung 1 / phr | Mischung 2 / phr | Mischung 3 / phr | Mischung 4 / phr | Mischung 5 / phr | Mischung 6 / phr | Mischung 7 / phr | Mischung 8 / phr | Mischung 9 / phr | Mischung 10 / phr | Mischung 11/ phr Erf. | Mischung 12 / phr Erf. | Mischung 13 / phr Erf. | Mischung 14 / phr Erf. | Mischung 15 / phr Erf. | Mischung 16 / phr Erf. | Mischung 17 / phr Erf. | Mischung 18 / phr Erf. | Mischung 19 / phr Erf. |
|---|---|---|---|---|---|---|---|---|---|---|---|---|---|---|---|---|---|---|---|
| **1. Stufe** | | | | | | | | | | | | | | | | | | | |
| NR^{a)} | 10,0 | 10,0 | 10,0 | 10,0 | 10,0 | 10,0 | 10,0 | 10,0 | 10,0 | 10,0 | 10,0 | 10,0 | 10,0 | 10,0 | 10,0 | 10,0 | 10,0 | 10,0 | 10,0 |
| BR^{b)} | 18,0 | 18,0 | 18,0 | 18,0 | 18,0 | 18,0 | 18,0 | 18,0 | 18,0 | 18,0 | 18,0 | 18,0 | 18,0 | 18,0 | 18,0 | 18,0 | 18,0 | 18,0 | 18,0 |
| S-SBR^{c)} | 72,0 | 72,0 | 72,0 | 72,0 | 72,0 | 72,0 | 72,0 | 72,0 | 72,0 | 72,0 | 72,0 | 72,0 | 72,0 | 72,0 | 72,0 | 72,0 | 72,0 | 72,0 | 72,0 |
| Kieselsäure^{d)} | 95,0 | 95,0 | 95,0 | 95,0 | 95,0 | 95,0 | 95,0 | 95,0 | 95,0 | 95,0 | 95,0 | 95,0 | 95,0 | 95,0 | 95,0 | 95,0 | 95,0 | 95,0 | 95,0 |
| TDAE Öl^{e)} | 50,0 | 50,0 | 50,0 | 50,0 | 50,0 | 50,0 | 50,0 | 50,0 | 50,0 | 50,0 | 50,0 | 50,0 | 50,0 | 50,0 | 50,0 | 50,0 | 50,0 | 50,0 | 50,0 |
| 6PPD^{f)} | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| Ozonschutzwachs | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| Zinkoxid | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 |
| Stearinsäure | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 | 2,5 |
| Vergleichsbsp.3 | 8,5 | | | | | | | | | | | | | | | | | | |
| Vergleichsbsp.4 | | 9,3 | | | | | | | | | | | | | | | | | |
| Vergleichsbsp.5 | | | 10,1 | | | | | | | | | | | | | | | | |
| Vergleichsbsp.6 | | | | 8,8 | | | | | | | | | | | | | | | |
| Vergleichsbsp.7 | | | | | 8,0 | | | | | | | | | | | | | | |
| Vergleichsbsp.8 | | | | | | 7,2 | | | | | | | | | | | | | |
| Vergleichsbsp.10 | | | | | | | 6,8 | | | | | | | | | | | | |
| Vergleichsbsp.11 | | | | | | | | 6,8 | | | | | | | | | | | |
| Vergleichsbsp.12 | | | | | | | | | 6,8 | | | | | | | | | | |
| Vergleichsbsp.13 | | | | | | | | | | 6,8 | | | | | | | | | |
| Beispiel 1 | | | | | | | | | | | 8,4 | | | | | | | | |
| Beispiel 2 | | | | | | | | | | | | 9,2 | | | | | | | |
| Beispiel 3 | | | | | | | | | | | | | 10,0 | | | | | | |
| Beispiel 4 | | | | | | | | | | | | | | 11,5 | | | | | |
| Beispiel 5 | | | | | | | | | | | | | | | 10,4 | | | | |
| Beispiel 6 | | | | | | | | | | | | | | | | 9,21 | | | |
| Beispiel 7 | | | | | | | | | | | | | | | | | 10,0 | | |
| Beispiel 8 | | | | | | | | | | | | | | | | | | 9,4 | |
| Beispiel 9 | | | | | | | | | | | | | | | | | | | 8,7 |
| | | | | | | | | | | | | | | | | | | | |

| **2. Stufe** | | | | | | | | | | | | | | | | | | | |
|---|---|---|---|---|---|---|---|---|---|---|---|---|---|---|---|---|---|---|---|
| Batch Stufe 1 | | | | | | | | | | | | | | | | | | | |

| **3. Stufe** | | | | | | | | | | | | | | | | | | | |
|---|---|---|---|---|---|---|---|---|---|---|---|---|---|---|---|---|---|---|---|
| Batch Stufe 2 | | | | | | | | | | | | | | | | | | | |
| DPG^{g)} | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| CBS^{h)} | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| Schwefelⁱ⁾ | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |

### Verwendete Substanzen:

a) NR TSR: Naturkautschuk (TSR = Technically Specified Rubber).
b) Europrene Neocis BR 40, Fa. Polimeri.
c) S-SBR: Sprintan® SLR-4601, Fa. Trinseo.
d) Kieselsäure: ULTRASIL® VN 3 GR der Firma Evonik Industries AG (gefällte Kieselsäure, BET-Oberfläche = 175 m²/g).
e) TDAE-ÖI: TDAE = Treated Distillate Aromatic Extract.
f) 6PPD: *N*-(1,3-dimethylbutyl)-*N'*-phenyl-p-phenylene diamine (6PPD).
g) DPG: *N*,*N*'-Diphenylguanidin (DPG).
h) CBS: *N*-Cyclohexyl-2-benzothiazolsulfenamid.
i) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 (gemessen am Moving Die Rheometer gemäß ASTM D 5289-12/ ISO 6502) unter Druck bei 160°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 2 angegebenen Prüfmethode. Die Ergebnisse der gummitechnischen Prüfung sind in Tabelle 3 angegeben.

**Tabelle 2:**

| Physikalische Testung | Norm/ Bedingungen |
|---|---|
| Rückprallelastizität bei 23°C und 70°C | ISO 8307 (Fallhöhe 500 mm, Stahlkugel d = 19 mm, 28 g) |
| (%) | |

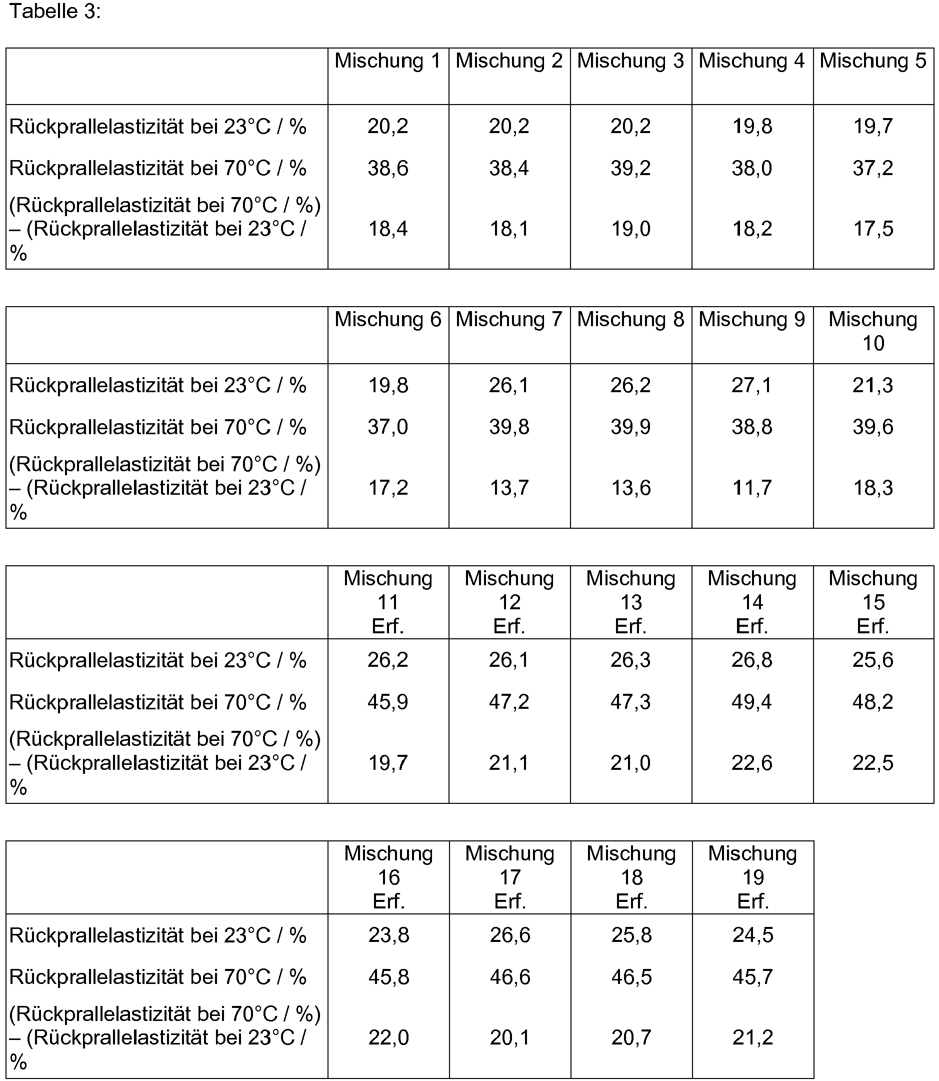

Gegenüber den Vergleichsmischungen zeichnen sich die erfindungsgemäßen Mischungen durch einen verbesserten Rollwiderstand aus (Rückprallelastizität gemessen bei 70°C). Ferner führen die erfindungsgemäßen Silanmischungen zu einer vorteilhaften Lösung des Zielkonflikts zwischen Rollwiderstand und Nasshaftung (Differenz der Rückprallelastizität gemessen bei 70°C und bei 23°C).

Beispiel 18: Gummitechnische Untersuchungen
Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks.

**Tabelle 4:**

| | Mischung 7 / phr | Mischung 8 / phr | Mischung 9 / phr | Mischung 10 / phr | Mischung 20/ phr Erf. | Mischung 21 / phr Erf. | Mischung 22 / phr Erf. |
|---|---|---|---|---|---|---|---|
| **1. Stufe** | | | | | | | |
| NR^{a)} | 10,0 | 10,0 | 10,0 | 10,0 | 10,0 | 10,0 | 10,0 |
| BR^{b)} | 18,0 | 18,0 | 18,0 | 18,0 | 18,0 | 18,0 | 18,0 |
| S-SBR^{c)} | 72,0 | 72,0 | 72,0 | 72,0 | 72,0 | 72,0 | 72,0 |
| Kieselsäure^{d)} | 95,0 | 95,0 | 95,0 | 95,0 | 95,0 | 95,0 | 95,0 |
| TDAE Öl^{e)} | 50,0 | 50,0 | 50,0 | 50,0 | 50,0 | 50,0 | 50,0 |
| 6PPD^{f)} | 2,0 | 2,0 | 2,0 | 2,0 | 2,0 | 2,0 | 2,0 |
| Ozonschutzwachs | 2,0 | 2,0 | 2,0 | 2,0 | 2,0 | 2,0 | 2,0 |
| Zinkoxid | 2,5 | 2,5 | 2,5 | 2,5 | 2,5 | 2,5 | 2,5 |
| Stearinsäure | 2,5 | 2,5 | 2,5 | 2,5 | 2,5 | 2,5 | 2,5 |
| Vergleichsbsp.10 | 6,8 | | | | | | |
| Vergleichsbsp.11 | | 6,8 | | | | | |
| Vergleichsbsp.12 | | | 6,8 | | | | |
| Vergleichsbsp.13 | | | | 6,8 | | | |
| Beispiel 10 | | | | | 10,7 | | |
| Beispiel 11 | | | | | | 12,7 | |
| Beispiel 12 | | | | | | | 15,9 |

| **2. Stufe** | | | | | | | |
|---|---|---|---|---|---|---|---|
| Batch Stufe 1 | | | | | | | |

| **3. Stufe** | | | | | | | |
|---|---|---|---|---|---|---|---|
| Batch Stufe 2 | | | | | | | |
| DPG⁹⁾ | 2,0 | 2,0 | 2,0 | 2,0 | 2,0 | 2,0 | 2,0 |
| CBS^{h)} | 2,0 | 2,0 | 2,0 | 2,0 | 2,0 | 2,0 | 2,0 |
| Schwefelⁱ⁾ | 2,0 | 2,0 | 2,0 | 2,0 | 2,0 | 2,0 | 2,0 |

### Verwendete Substanzen:

a) NR TSR: Naturkautschuk (TSR = Technically Specified Rubber).
b) Europrene Neocis BR 40, Fa. Polimeri.
c) S-SBR: Sprintan® SLR-4601, Fa. Trinseo.
d) Kieselsäure: ULTRASIL® VN 3 GR der Firma Evonik Industries AG (gefällte Kieselsäure, BET-Oberfläche = 175 m²/g).
e) TDAE-ÖI: TDAE = Treated Distillate Aromatic Extract.
f) 6PPD: *N*-(1,3-dimethylbutyl)-*N'*-phenyl-p-phenylene diamine (6PPD).
g) DPG: *N*,*N*'-Diphenylguanidin (DPG).
h) CBS: *N*-Cyclohexyl-2-benzothiazolsulfenamid.
i) Schwefel: Mahlschwefel.

Die Mischungsherstellung erfolgte unter in der Kautschukindustrie üblichen Verfahren unter in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 (gemessen am Moving Die Rheometer gemäß ASTM D 5289-12/ ISO 6502) unter Druck bei 160°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 2 angegebenen Prüfmethode. Die Ergebnisse der gummitechnischen Prüfung sind in Tabelle 5 angegeben.

**Tabelle 5:**

| | Mischung 7 | Mischung 8 | Mischung 9 | Mischung 10 | Mischung 20 Erf. | Mischung 21 Erf. | Mischung 22 Erf. |
|---|---|---|---|---|---|---|---|
| Rückprallelastizität bei 23°C / % | 26,1 | 26,2 | 27,1 | 21,3 | 27,9 | 27,9 | 28,1 |
| Rückprallelastizität bei 70°C / % | 39,8 | 39,9 | 38,8 | 39,6 | 46,8 | 46,6 | 47,2 |
| (Rückprallelastizität bei 70°C / %) - (Rückprallelastizität bei 23°C / % | 13,7 | 13,6 | 11,7 | 18,3 | 18,9 | 18,6 | 19,1 |

Wie im Beispiel 13 zeichnen sich die erfindungsgemäßen Mischungen gegenüber den Vergleichsmischungen durch einen verbesserten Rollwiderstand aus (Rückprallelastizität gemessen bei 70°C). Erneut führen die erfindungsgemäßen Silanmischungen zu einer vorteilhaften Lösung des Zielkonflikts zwischen Rollwiderstand und Nasshaftung (Differenz der Rückprallelastizität gemessen bei 70°C und bei 23°C). Der molgleiche Einsatz der erfindungsgemäßen Silanmischungen demonstriert, dass der Vorteil unabhängig von der Anzahl CH₂-Einheiten der Alkylgruppe des Silans der Formel I ist.

## Patentansprüche

1. Silanmischung, enthaltend ein Silan der Formel I
(R¹)_{y}(R²)_{3-y}Si-R³-(S-R⁴)ₙ-S-R⁵ (I),
und ein Silan der Formel II
(R¹)_{y}(R²)_{3-y}Si-R³-(S-R⁴)_{z}-S-R³-Si(R¹)_{y}(R²)_{3-y} (II),
wobei R¹ gleich oder verschieden sind und C1-C10-Alkoxygruppen, Phenoxygruppe, C4-C10-Cycloalkoxygruppen oder Alkylpolyethergruppe -O-(R⁶-O)ᵣ-R⁷ mit R⁶ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 und R⁷ unsubstituierte oder substituierte, verzweigte oder unverzweigte einbindige Alkyl-, Alkenyl-, Aryl- oder Aralkylgruppe ist,
R² gleich oder verschieden sind und C6-C20-Arylgruppen, C1-C10-Alkylgruppen, C2-C20-Alkenylgruppe, C7-C20-Aralkylgruppe oder Halogen ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind,
R⁵ eine -C(=O)-CH₃, -C(=O)-C₂H₅, -C(=O)-C₃H₇, -C(=O)-C₄H₉, -C(=O)-C₅H₁₁, -C(=O)-C₆H₁₃, -C(=O)-C₇H₁₅, -C(=O)-C₈H₁₇, -C(=O)-C₉H₁₉, -C(=O)-C₁₀H₂₁, -C(=O)-C₁₁H₂₃, -C(=O)-C₁₂H₂₅, -C(=O)-C₁₃H₂₇, -C(=O)-C₁₄H₂₉, -C(=O)-C₁₅H₃₁, -C(=O)-C₁₆H₃₃ oder -C(=O)-C₁₇H₃₅ ist,
und n 1, 2 oder 3 ist, y gleich oder verschieden sind und 1, 2 oder 3 sind, z ist 1, 2 oder 3, und das Molverhältnis an Silan der Formel I zu Silan der Formel II 20:80 - 90:10 beträgt.

2. Silanmischung gemäß Anspruch 1, **dadurch gekennzeichnet, dass** n gleich 1 ist und z gleich 1 ist.

3. Silanmischung gemäß Anspruch 1, **dadurch gekennzeichnet, dass** das Silan der Formel I (EtO)₃Si-(CH₂)₃-(S-(CH₂)₆)ₙ-S-C(=O)-R⁵ und das Silan der Formel II (EtO)₃Si-(CH₂)₃-S-(CH₂)₆-S-(CH₂)₃-Si(OEt)₃, wobei n gleich 1 ist, ist.

4. Silanmischung gemäß Anspruch 1, **dadurch gekennzeichnet, dass** das Silan der Formel I (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ oder (EtO)₃Si-(CH₂)₃-S-(CH₂)₆-S-C(=O)-C₁₇H₃₅ und das Silan der Formel II (EtO)₃Si-(CH₂)₃-S-(CH₂)₆-S-(CH₂)₃-Si(OEt)₃ ist.

5. Silanmischung gemäß Anspruch 1, **dadurch gekennzeichnet, dass** das Molverhältnis an Silan der Formel I zu Silan der Formel II 30:70 - 75:25 beträgt.

6. Verfahren zur Herstellung von Silanmischung gemäß Anspruch 1, **dadurch gekennzeichnet, dass** man das Silan der Formel I
(R¹)_{y}(R²)_{3-y}Si-R³-(S-R⁴)ₙ-S-R⁵ (I),
und ein Silan der Formel II
(R¹)_{y}(R²)_{3-y}Si-R³-(S-R⁴)_{z}-S-R³-Si(R¹)_{y}(R²)_{3-y} (II),
wobei R¹, R², R³, R⁴, R⁵, n, y und z die oben genannte Bedeutung haben,
in einem Molverhältnis von 20:80 - 90:10 mischt.

7. Verfahren zur Herstellung von Silanmischung gemäß Anspruch 6, **dadurch gekennzeichnet, dass** n = 1 und z = 1 sind.

8. Verfahren zur Herstellung von Silanmischung gemäß Anspruch 6, **dadurch gekennzeichnet, dass** das Molverhältnis an Silan der Formel I zu Silan der Formel II 30:70 - 75:25 beträgt.

9. Verfahren zur Herstellung von Silanmischung gemäß Anspruch 7, **dadurch gekennzeichnet, dass** das Silan der Formel I (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ oder (EtO)₃Si-(CH₂)₃-S-(CH₂)₆-S-C(=O)-C₁₇H₃₅ und das Silan der Formel II (EtO)₃Si-(CH₂)₃-S-(CH₂)₆-S-(CH₂)₃-Si(OEt)₃ ist.

10. Verfahren zur Herstellung von Silanmischung gemäß Anspruch 2, **dadurch gekennzeichnet, dass** man in einem ersten Schritt ein Mercaptosilan der Formel III
(R¹)_{y}(R²)_{3-y}Si-R³-SH (III)
mit einer Halogenverbindung der Formel IV
Hal-R⁴-Hal (IV),
wobei R¹, R², R³ und R⁴ die oben genannte Bedeutungen haben und Hal gleich F, Cl, Br oder I ist,
in einem Molverhältnis der Formel (III) zur Formel (IV) von 34:66 - 76:24 umsetzt und in einem zweiten Schritt das Produkt aus dem ersten Verfahrensschritt mit einem Salz einer Thiocarbonsäure der Formel (V)
NaS-C(=O)-R⁵ (V)
wobei R⁵ die oben genannte Bedeutung hat, umsetzt,
oder in dem zweiten Schritt das Produkt aus dem ersten Verfahrensschritt mit NaSH und anschließend einem Säurechlorid der Formel (VI)
Cl-C(=O)-R⁵ (VI)
wobei R⁵ die oben genannte Bedeutung hat, umsetzt.

11. Verfahren zur Herstellung von Silanmischung gemäß Anspruch 10, **dadurch gekennzeichnet, dass** das Mercaptosilan der Formel III
(EtO)₃Si-(CH₂)₃-SH,
die Halogenverbindung der Formel IV
Cl-(CH₂)₆-Cl,
und die Thiocarbonsäure der Formel V
NaS-C(=O)-CH₃, NaS-C(=O)-C₇H₁₅ oder NaS-C(=O)-C₁₇H₃₅ ist.

12. Verfahren zur Herstellung von Silanmischung gemäß Anspruch 10, **dadurch gekennzeichnet, dass** das Mercaptosilan der Formel III
(EtO)₃Si-(CH₂)₃-SH,
die Halogenverbindung der Formel IV
Cl-(CH₂)₆-Cl,
und das Säurechlorid der Formel VI Cl-C(=O)-CH₃, Cl-C(=O)-C₇H₁₅ oder Cl-C(=O)-C₁₇H₃₅ ist.

## Claims

1. Silane mixture comprising a silane of the formula I
(R¹)_{y}(R²)_{3-y}Si-R³(S-R⁴)ₙ-S-R⁵ (I)
and a silane of the formula II
(R¹)_{y}(R²)_{3-y}Si-R³-(S-R⁴)_{z}-S-R³-Si(R¹)_{y}(R²)_{3-y} (II)
where R¹ are the same or different and are C1-C10-alkoxy groups, phenoxy group, C4-C10-cycloalkoxy groups or alkyl polyether group -O-(R⁶-O)ᵣ-R⁷ where R⁶ are the same or different and are a branched or unbranched, saturated or unsaturated, aliphatic, aromatic or mixed aliphatic/aromatic divalent C1-C30 hydrocarbon group, r is an integer from 1 to 30 and R⁷ is an unsubstituted or substituted, branched or unbranched monovalent alkyl, alkenyl, aryl or aralkyl group,
R² are the same or different and are C6-C20-aryl groups, C1-C10-alkyl groups, C2-C20-alkenyl group, C7-C20-aralkyl group or halogen,
R³ are the same or different and are a branched or unbranched, saturated or unsaturated, aliphatic, aromatic or mixed aliphatic/aromatic divalent C1-C30 hydrocarbon group,
R⁴ are the same or different and are a branched or unbranched, saturated or unsaturated, aliphatic, aromatic or mixed aliphatic/aromatic divalent C1-C30 hydrocarbon group,
R⁵ is a -C(=O)-CH₃, -C(=O)-C₂H₅, -C(=O)-C₃H₇, -C(=O)-C₄H₉, -C (=O)-C₅H₁₁, -C(=O)-C₆H₁₃, -C(=O)-C₇H₁₅, -C(=O)-C₈H₁₇, -C(=O)-C₉H₁₉, -C(=O)-C₁₀H₂₁, -C(=O)-C₁₁H₂₃, -C(=O)-C₁₂H₂₅, -C(=O)-C₁₃H₂₇, -C(=O)-C₁₄H₂₉, -C(=O)-C₁₅H₃₁, -C(=O)-C₁₆H₃₃ or -C(=O)-C₁₇H₃₅,
and n is 1, 2 or 3, y are the same or different and are 1, 2 or 3, z is 1, 2 or 3,
and the molar ratio of silane of the formula I to silane of the formula II is 20:80-90:10.

2. Silane mixture according to Claim 1, **characterized in that** n is 1 and z is 1.

3. Silane mixture according to Claim 1, **characterized in that** the silane of the formula I is (EtO)₃Si-(CH₂)₃-(S-(CH₂)₆)ₙ-S-C(=O)-R⁵ and the silane of the formula II is (EtO)₃Si-(CH₂)₃-S-(CH₂)₆-S-(CH₂)₃-Si(OEt)₃, where n is 1.

4. Silane mixture according to Claim 1, **characterized in that** the silane of the formula I is (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ or (EtO)₃Si-(CH₂)₃-S-(CH₂)₆-S-C(=O)-C₁₇H₃₅ and the silane of the formula II is (EtO)₃Si-(CH₂)₃-S-(CH₂)₆-S-(CH₂)₃-Si(OEt)₃.

5. Silane mixture according to Claim 1, **characterized in that** the molar ratio of silane of the formula I to silane of the formula II is 30:70-75:25.

6. Process for preparing silane mixture according to Claim 1, **characterized in that** the silane of the formula I
(R¹)_{y}(R²)_{3-y}Si-R³-(S-R⁴)ₙ-S-R⁵ (I)
and a silane of the formula II
(R¹)_{y}(R²)_{3-y}Si-R³-(S-R⁴)_{z}-S-R³-Si(R¹)_{y}(R²)_{3-y} (II)
where R¹, R², R³, R⁴, R⁵, n, y and z have the definition given above
are mixed in a molar ratio of 20:80-90:10.

7. Process for preparing silane mixture according to Claim 6, **characterized in that** n = 1 and z = 1.

8. Process for preparing silane mixture according to Claim 6, **characterized in that** the molar ratio of silane of the formula I to silane of the formula II is 30:70-75:25.

9. Process for preparing silane mixture according to Claim 7, **characterized in that** the silane of the formula I is
(EtO)₃Si-(CH₂)₃-S-(CH₂)₆-S-C (=O)-CH₃, (EtO)₃Si-(CH₂)₃-S-(CH₂)₆-S-C(=O)-C₇H₁₅ or (EtO)₃Si-(CH₂)₃-S-(CH₂)₆-S-C(=O)-C₁₇H₃₅ and the silane of the formula II is (EtO)₃Si-(CH₂)₃-S-(CH₂)₆-S-(CH₂)₃-Si(OEt)₃.

10. Process for preparing silane mixture according to Claim 2, **characterized in that** in a first step a mercaptosilane of the formula III
(R¹)_{y}(R²)_{3-y}Si-R³-SH (III)
is reacted with a halogen compound of the formula IV
Hal-R⁴-Hal (IV)
where R¹, R², R³ and R⁴ have the definitions given above and Hal is F, Cl, Br or I
in a molar ratio of the formula (III) to the formula (IV) of 34:66-76:24
and in a second step the product from the first process step is reacted with a salt of a thiocarboxylic acid of the formula (V)
NaS-C(=O)-R⁵ (V)
where R⁵ has the definition given above,
or, in the second step, the product from the first process step is reacted with NaSH and then an acid chloride of the formula (VI)
Cl-C(=O)-R⁵ (VI)
where R⁵ has the definition given above.

11. Process for preparing silane mixture according to Claim 10, **characterized in that** the mercaptosilane of the formula III is
(EtO)₃Si-(CH₂)₃-SH,
the halogen compound of the formula IV is Cl-(CH₂)₆-Cl,
and the thiocarboxylic acid of the formula V is NaS-C(=O)-CH₃, NaS-C(=O)-C₇H₁₅ or NaS-C(=O)-C₁₇H₃₅.

12. Process for preparing silane mixture according to Claim 10, **characterized in that** the mercaptosilane of the formula III is
(EtO)₃Si-(CH₂)₃-SH
the halogen compound of the formula IV is
Cl-(CH₂)₆-Cl,
and the acid chloride of the formula VI is Cl-C(=O)-CH₃, Cl-C(=O)-C₇H₁₅ or Cl-C(=O)-C₁₇H₃₅.

## Revendications

1. Mélange de silanes, contenant un silane de la formule I :
(R¹)_{y}(R²)_{3-y}Si-R³-(S-R⁴)ₙ-S-R⁵ (I),
et un silane de la formule II :
(R¹)_{y}(R²)_{3-y}Si-R³-(S-R⁴)_{z}-S-R³-Si(R¹)_{y}(R²)_{3-y} (II)
dans lesquelles les R¹ sont identiques ou différents, et représentent des groupes alcoxy en C1-C10, un groupe phénoxy, des groupes cycloalcoxy en C4-C10 ou un groupe alkylpolyéther -O-(R⁶-O)ᵣ-R⁷ avec les R⁶ identiques ou différents et représentant un groupe hydrocarboné en C1-C30 bivalent ramifié ou non ramifié, saturé ou insaturé, aliphatique, aromatique ou aliphatique/aromatique mixte, r représentant un nombre entier de 1 à 30, et R⁷ représentant un groupe alkyle, alcényle, aryle ou aralkyle monovalent non substitué ou substitué, ramifié ou non ramifié,
les R² sont identiques ou différents, et représentent des groupes aryle en C6-C20, des groupes alkyle en C1-C10, un groupe alcényle en C2-C20, un groupe aralkyle en C7-C20 ou un halogène,
les R³ sont identiques ou différents, et représentent un groupe hydrocarboné en C1-C30 bivalent ramifié ou non ramifié, saturé ou insaturé, aliphatique, aromatique ou aliphatique/aromatique mixte,
les R⁴ sont identiques ou différents, et représentent un groupe hydrocarboné en C1-C30 bivalent ramifié ou non ramifié, saturé ou insaturé, aliphatique, aromatique ou aliphatique/aromatique mixte,
R⁵ représente un -C(=O)-CH₃, -C(=O)-C₂H₅, -C(=O)-C₃H₇, - C(=O)-C₄H₉, -C(=O)-C₅H₁₁, -C(=O)-C₆H₁₃, -C(=O)-C₇H₁₅, - C(=O)-C₈H₁₇, -C(=O)-C₉H₁₉, -C(=O)-C₁₀H₂₁, -C(=O)-C₁₁H₂₃, - C(=O)-C₁₂H₂₅, -C(=O)-C₁₃H₂₇, -C(=O)-C₁₄H₂₉, -C(=O)-C₁₅H₃₁, - C(=O)-C₁₆H₃₃ ou -C(=O)-C₁₇H₃₅,
et n représente 1, 2 ou 3, les y sont identiques ou différents, et représentent 1, 2 ou 3, z représente 1, 2 ou 3, et le rapport molaire entre le silane de la formule I et le silane de la formule II est de 20:80 à 90:10.

2. Mélange de silanes selon la revendication 1, **caractérisé en ce que** n représente 1 et z représente 1.

3. Mélange de silanes selon la revendication 1, **caractérisé en ce que** le silane de la formule I est (EtO)₃Si-(CH₂)₃-(S-(CH₂)₆)ₙ-S-C(=O)-R⁵ et le silane de la formule II est (EtO)₃Si-(CH₂)₃-S-(CH₂)₆-S-(CH₂)₃-Si(OEt)₃, n représentant 1.

4. Mélange de silanes selon la revendication 1, **caractérisé en ce que** le silane de la formule I est (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ ou (EtO)₃Si-(CH₂)₃-S-(CH₂)₆-S-C(=O)-C₁₇H₃₅ et le silane de la formule II est (EtO)₃Si-(CH₂)₃-S-(CH₂)₆-S-(CH₂)₃-Si(OEt)₃.

5. Mélange de silanes selon la revendication 1, **caractérisé en ce que** le rapport molaire entre le silane de la formule I et le silane de la formule II est de 30:70 à 75:25.

6. Procédé de fabrication d'un mélange de silanes selon la revendication 1, **caractérisé en ce que** le silane de la formule I :
(R¹)_{y}(R²)_{3-y}Si-R³-(S-R⁴)ₙ-S-R⁵ (I),
et un silane de la formule II :
(R¹)_{y}(R²)_{3-y}Si-R³-(S-R⁴)_{z}-S-R³-Si(R¹) _{y}(R²)_{3-y} (II)
dans lesquelles R¹, R², R³, R⁴, R⁵, n, y et z ont la signification indiquée précédemment,
sont mélangés en un rapport molaire de 20:80 à 90:10.

7. Procédé de fabrication d'un mélange de silanes selon la revendication 6, **caractérisé en ce que** n = 1 et z = 1.

8. Procédé de fabrication d'un mélange de silanes selon la revendication 6, **caractérisé en ce que** le rapport molaire entre le silane de la formule I et le silane de la formule II est de 30:70 à 75:25.

9. Procédé de fabrication d'un mélange de silanes selon la revendication 7, **caractérisé en ce que** le silane de la formule I est (EtO)₃Si-(CH₂)₃-S-(CH₂)₆-S-C(=O)-CH₃, (EtO)₃Si-(CH₂)₃-S-(CH₂)₆-S-C(=O)-C₇H₁₅ ou (EtO)₃Si-(CH₂)₃-S-(CH₂)₆-S-C(=O)-C₁₇H₃₅ et le silane de la formule II est (EtO)₃Si-(CH₂)₃-S-(CH₂)₆-S-(CH₂)₃-Si(OEt)₃.

10. Procédé de fabrication d'un mélange de silanes selon la revendication 2, **caractérisé en ce que**, lors d'une première étape, un mercaptosilane de la formule III :
(R¹)_{y}(R²)_{3-y}Si-R³-SH (III)
est mis en réaction avec un composé d'halogène de la formule IV :
Hal-R⁴-Hal (IV)
dans lesquelles R¹, R², R³ et R⁴ ont les significations indiquées précédemment, et Hal représente F, Cl, Br ou I,
en un rapport molaire entre la formule (III) et la formule (IV) de 34:66 à 76:24,
et, lors d'une deuxième étape, le produit de la première étape de procédé est mis en réaction avec un sel d'un acide thiocarboxylique de la formule (V) :
NaS-C(=O)-R⁵ (V)
dans laquelle R⁵ a la signification indiquée précédemment,
ou, lors de la deuxième étape, le produit de la première étape de procédé est mis en réaction avec NaSH, puis avec un chlorure d'acide de la formule (VI) :
Cl-C(=O)-R⁵ (VI)
dans laquelle R⁵ a la signification indiquée précédemment.

11. Procédé de fabrication d'un mélange de silanes selon la revendication 10, **caractérisé en ce que** le mercaptosilane de la formule III est : (EtO)₃Si-(CH₂)₃-SH, le composé d'halogène de la formule IV est : Cl-(CH₂)₆-Cl, et l'acide thiocarboxylique de la formule V est : NaS-C(=O)-CH₃, NaS-C(=O)-C₇H₁₅ ou NaS-C(=O)-C₁₇H₃₅.

12. Procédé de fabrication d'un mélange de silanes selon la revendication 10, **caractérisé en ce que** le mercaptosilane de la formule III est :
(EtO)₃Si-(CH₂)₃-SH,
le composé d'halogène de la formule IV est :
Cl-(CH₂)₆-Cl,
et le chlorure d'acide de la formule VI est : Cl-C(=O)-CH₃, Cl-C(=O)-C₇H₁₅ ou Cl-C(=O)-C₁₇H₃₅.
